# EUROPEAN PATENT APPLICATION

(11) **EP 4 134 352 A1**
(43) Date of publication of application: **15.02.2023**
(21) Application number: 22189852.1
(22) Date of filing: 11.08.2022
(51) Int. Cl.: C01B 35/04, C25B 1/00

(54) **MASS PRODUCTION OF METAL BORIDES BY MOLTEN SALT ELECTROLYSIS**

(30) Priority: 12.08.2021 TR 202112770
(71) Applicant: Istanbul Teknik Universitesi, 34469 Istanbul (TR); HITIT UNIVERSITESI REKTORLUGU, CORUM (TR)
(72) Inventor: TIMUR, SERVET IBRAHIM, ISTANBUL (TR); KARTAL SIRELI, GULTEN, ISTANBUL (TR); DARYAL, MEHMET BARIS, ISTANBUL (TR); KARTAL, LEVENT, CORUM (TR)
(74) Representative: Berkkam, Ayfer

(57) **Abstract**

The present invention relates to a method for obtaining single or multiple transition group metal borides in boride metal or liquid metal/alloy having a melting temperature lower than the electrolysis application temperature without the need for the use of halides. The method developed by the invention enables the production of metal-metal boride alloys in bulk. In the text of the invention, for example, production possibilities of trinickel boride and nickel-trinickel boride alloys in bulk by molten salt electrolysis are defined. The control of the nickel ratio in the alloy is also described.

## Description

### Technical Field

The present invention relates to a method for obtaining transition metal borides without the need for the use of halides.

### Prior Art

Various metal boride coatings can be applied to metal surfaces for purposes such as increasing thermal and chemical strength and hardness, regulating thermal and electrical conductivity, etc. These can be applied by chemical deposition on the related surface, carbothermic or metallothermic reactions, physical deposition using the desired metal boride in powder form, and infiltration. Carbothermic and metallothermic methods form a product contaminated with carbide and oxide and require processes for their removal. Chemical deposition, on the other hand, causes high-cost, low-speed production. For the formation of metal borides, halide salts of boron and desired metal are also widely used. However, alternatives to the use of halide salts should be developed due to effects on the human health and the environment of halogens released due to the use of these compounds.

Document numbered US2741587A discloses the production of refractory metal boride powders. It has been stated that boric anhydrides or borates and oxides of the desired metal are used for this. A barrier positioned between the anode and the cathode was used for the production of metal borides as powders.

In documents numbered US3697390A and US3827954A, alkali metal borates, and alkali and earth alkaline metal salts of the related metal oxide are used to obtain titanium, zirconium, and hafnium boride coatings.

Document numbered US2015060288A1 discloses the use of sodium borate to form a boride on a surface. It has been stated that in the case of a metal different from the base structure on the surface the metal and the boride is formed sequentially.

In the document titled "Synthesis of group IV and V metal diboride nanocrystals via borothermal reduction with sodium borohydride" (Zoli, L, Galizia, P, Silvestroni, L, Sciti, D. J Am Ceram Soc. 2018; 101: 2627- 2637.) the interaction of sodium borohydride (NaBH₄) and group IV and V transition metal oxides was studied to form the related diborides. It has been revealed that Na-metal-0 and Na-B-O intermediate species are formed and related metal borides are formed from them.

### Objects of the Invention

An object of the present invention is to develop a method for producing single or multiple metal borides in metal boride, metal, or liquid metal/alloy having a melting temperature lower than the electrolysis application temperature.

Another object of the present invention is to develop a method for producing metal borides without releasing harmful halogen gasses in the synthesis thereof.

A further object of the present invention is to develop a method for producing metal borides without the need to use a protective atmosphere.

A further object of the present invention is to develop a method suitable for industrial-scale applications, that allows the production of metal borides alone or in multiple structures, either as MeBx alone or in a metal or alloy, with low cost, ease of application, and high production speed. Products can be used for different purposes such as deoxidant, metal matrix composite, and direct use.

### Detailed Description of the Invention

The method developed to achieve the objects of the present invention is shown in the accompanying figures.
**Figure 1** XRD plot of a Ni₃B sample obtained according to the invention.
**Figure 2** SEM image of a Ni₃B sample obtained according to the invention.
**Figure 3** XRD graphs of Ni-Ni₃B alloy samples obtained according to the invention.
**Figure 4a** Light microscope image of a Ni-Ni₃B alloy sample obtained with a mixture with a Ni:B ratio of 2 according to the invention.
**Figure 4b** SEM image of a Ni-Ni₃B alloy sample obtained with a mixture with a Ni:B ratio of 2 according to the invention.
**Figure 4c** Light microscope image of a Ni-Ni₃B alloy sample obtained with a mixture with a Ni:B ratio of 1 according to the invention.
**Figure 4d** SEM image of a Ni-Ni₃B alloy sample obtained with a mixture with a Ni:B ratio of 1 according to the invention.
**Figure 4e** Light microscope image of a Ni-Ni₃B alloy sample obtained with a mixture with a Ni:B ratio of 0.5 according to the invention.
**Figure 4f** SEM image of a Ni-Ni₃B alloy sample obtained with a mixture with a Ni:B ratio of 0.5 according to the invention.

The metal boride production method according to the invention is essentially a molten salt electrolysis method. Boron source may be any boron-containing compound but is generally selected from borates of alkali or alkaline earth metal and mixtures thereof. Boron source also serves as an electrolyte component. The metal source is selected from oxides, sulfides, sulfates, nitrates, borates of the metal of which borides are to be produced, or any single or double salt or oxide compound, carbonates, and hydroxides forming the oxides related to the thermal decomposition output and their mixtures. Both boron source and metal source compounds are selected from those that are stable and non-halogenated in the electrolysis process. However, it is also possible to apply the method using halide compounds under special conditions.

With the invention, metal boride and metal-metal boride and metal-multiple metal boride alloys/mixtures can be produced. For example, with the invention, trinickel boride (Ni₃B) alone and nickel-trinickel boride alloys can be produced. With the same principles, borides of other metals, especially cobalt and palladium, can also be produced.

For this, a current density preferably of 50 to 1000 mA/cm², in particular, 200 to 400 mA/cm² at a temperature of 800 to 1200°C is used. In the exemplary embodiment of the invention, the molten mixture is set such that the nickel/boron ratio is between 0.1 and 10 by weight. In the exemplary embodiment of the invention, although the given current densities have been used, the current density may be at any level above 50 mA/cm².

According to the exemplary embodiment of the invention, some experiments were carried out with sodium tetraborate (Na₂B₄O₇) and nickel oxide (NiO).

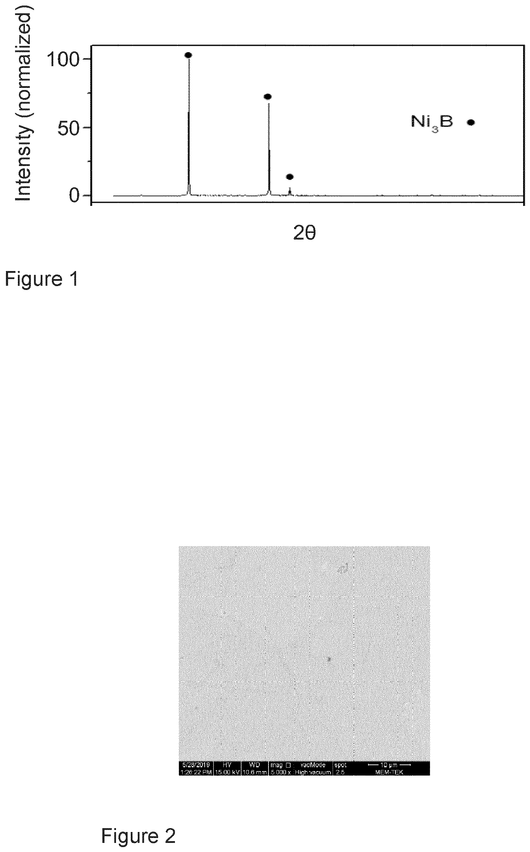

In the first experiment, a mixture containing Na₂B₄O₇ and NiO melted at 1200°C with a nickel/boron ratio of 0.5 by weight was prepared and electrolysis was carried out for 30 minutes with a current density of 400 mA/cm². The X-ray diffraction (XRD) graph and scanning electron microscopy (SEM) image of the Ni₃B samples obtained in bulk are presented in Figure 1 and Figure 2.

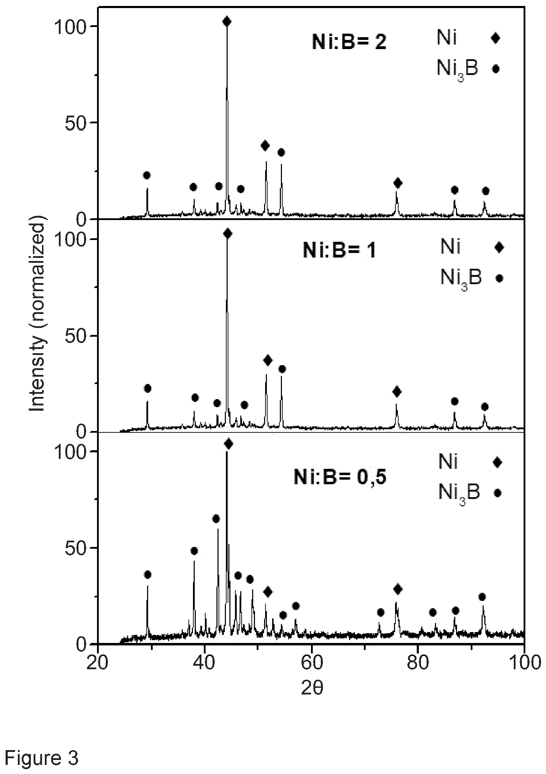

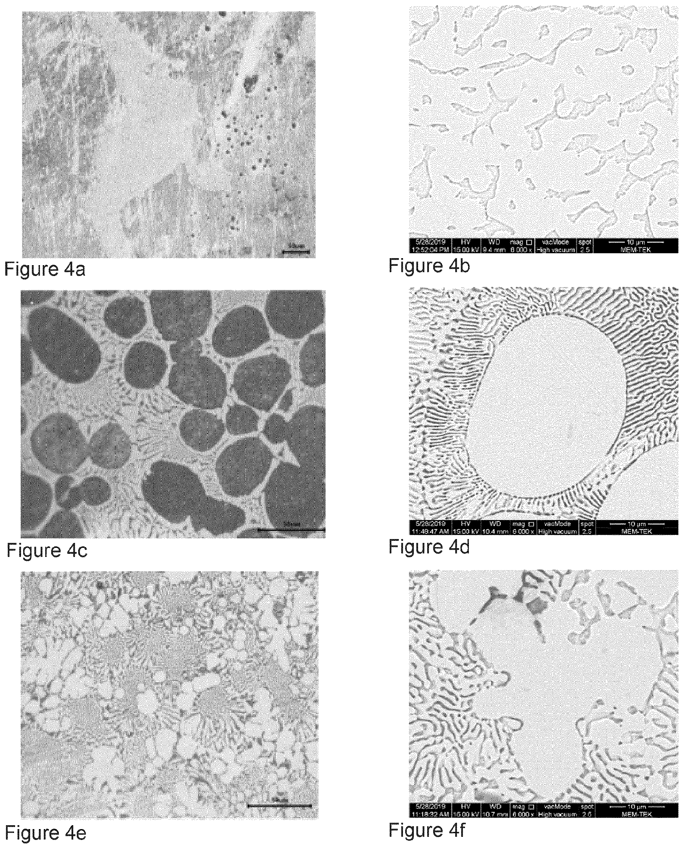

In the second experiment, mixtures containing Na₂B₄O₇ and NiO melted at 1200°C with a nickel/boron ratio of 0.5, 1, and 2 by weight were prepared and electrolysis was carried out for 30 minutes with a current density of 200 mA/cm². The Ni and Ni₃B ratios of the Ni-Ni₃B alloys obtained in bulk, as determined by Rietveld analysis are given in Table 1. The XRD graphs of the Ni-Ni₃B alloy samples obtained in bulk are presented in Figure 3 and the light microscope and SEM images are presented in Figure 4a-f.

**Table 1 - Ni and Ni₃B ratios obtained with different Ni/B ratios (% by weight)**

| Ni/B | Ni₃B | Ni |
|---|---|---|
| 2 | 66.6 | 33.4 |
| 1 | 72.6 | 27.4 |
| 0.5 | 97.7 | 2.3 |

As can be seen in these experiments, the metal ratio in the metal-metal boride alloy can be controlled by means of the metal ratio in the molten mixture, and the current density.

Although Na₂B₄O₇ was used in the exemplary embodiment of the invention, the electrolyte can also be selected from other oxides composed of ionic components with a low vapor pressure at the electrolysis temperature, or stable nitrate, sulfate, or other salts under conditions of electrolysis.

Electrolysis is carried out with a direct current. For this, different forms such as constant or time-varying triangular current, pulse current plating, interrupted current (PIC), periodic reverse current (PRC) can be used.

The molten salts are decomposed into their ions and related metal borides are formed by the co-reduction of metal and boron in the cathode. The metal source can also act as an electrolyte or a cathode.

Since the method according to the invention allows the use of non-halogenated metal and boron sources, it does not cause the formation of harmful gasses. Due to the covering behavior of the molten electrolyte phase, it is not necessary to use a protective atmosphere. Thus, the method can be applied in environments open to the atmosphere.

The anode may be selected from graphite, carbon, glassy carbon, related metal boride or related metal, or any metal or alloy or conductive material suitable for use in electrolysis conditions in anodic loading. Electrolysis can also be performed in a pot that is made of these materials and acts as an anode.

A solid or liquid cathode can be used.

Although metal and boron sources are selected from non-halogenated compounds, non-heat decomposing earth alkaline halides such as CaF₂ or different compounds can also be added as activators and for different reasons such as regulation of electrolyte viscosity.

Materials such as alkali/earth alkali metal oxides and metal hydroxides or nitrates may also be added to the molten mixture. They can act as conductivity enhancers, current regulators, reducers, or activators of metal and boron.

Various heating systems and methods can be used to achieve and maintain the electrolysis temperature, including the electrical resistance furnace and the systems that provide indirect heating. An induction furnace is used to achieve the electrolysis temperature in a preferred embodiment of the invention. This is because inductive heating increases the reaction rate by triggering the mixing and ion flow in the molten material. Heating may also be provided by current flowing through the system.

The metal boride production method developed by the invention allows the synthesis of metal borides or metal or alloys containing metal borides in a continuous bulk on industrial scales using cost-effective electrolyte components.

## Claims

1. A metal boride production method for the production of metal borides and metal-metal boride alloys in metal boride, metal or liquid metal/alloy having a melting temperature lower than the electrolysis application temperature, in bulk by molten salt electrolysis, that uses a boron source and electrolyte selected from alkali or earth alkaline metal borates and mixtures thereof, and metal source selected from oxides, sulfides, sulfates, nitrates and borates of the metal, carbonates, and hydroxides forming the oxides related to the thermal decomposition output, and mixtures thereof, **characterized in that**; a temperature of 800 to 1200°C and a current density above 50 mA/cm² are applied and **in that**; the metal/boron ratio is 0.1 to 10 by weight.

2. A metal boride production method according to claim 1, **characterized in that**; the metal source is used as an electrolyte, and the metal is obtained by reducing from the electrolyte.

3. A metal boride production method according to claim 1, **characterized in that**; the metal source is used as a cathode.

4. A metal boride production method according to claim 1, **characterized in that**; sodium tetraborate is used as a boron source and electrolyte, and nickel oxide is used as a metal source.

5. A metal boride production method according to claim 1, **characterized in that**; the metal ratio in the metal-metal boride alloy is controlled by means of the metal/boron ratio in the molten mixture.

6. A metal boride production method according to claim 1, **characterized in that**; the metal ratio in the metal-metal boride alloy is controlled by means of the current density.

7. A metal boride production method according to claim 1, **characterized in that**; a current density of 50 to 1000 mA/cm² is applied.
